# FASCICULE DE BREVET EUROPEEN

(11) **EP 3 346 878 B1**
(45) Date de publication et mention de la délivrance du brevet: **08.11.2023**
(21) Numéro de dépôt: 16775796.2
(22) Date de dépôt: 06.09.2016
(51) Int. Cl.: A47B 96/18, C03C 10/00, A47B 13/12, F24C 7/08, F24C 15/10

(54) **PLAN DE TRAVAIL EN VITROCERAMIQUE**
GLAS-KERAMIK-ARBEITSPLATTE
GLASS-CERAMIC WORKTOP

(30) Priorité: 08.09.2015 FR 1558345
(43) Date de publication de la demande: 18.07.2018
(73) Titulaire: Eurokera S.N.C., 02400 Château-Thierry (FR)
(72) Inventeur: DEMOL, Franck, 51100 Reims (FR); ROUX, Nicolas, 02400 Chateau-thierry (FR); VILATO, Pablo, 75014 Paris (FR)
(74) Mandataire: Saint-Gobain Recherche
(86) Numéro de dépôt international: PCT/FR2016/052215
(87) Numéro de publication internationale: WO 2017/042476

(56) Documents cités:
- EP-A1- 1 837 314
- EP-A1- 2 217 036
- EP-A2- 1 272 007
- WO-A1-2012/098330
- WO-A1-2014/009630
- WO-A1-2014/108521
- DE-A1-102005 039 298
- DE-U1- 20 312 793
- DE-U1-202005 003 809
- DE-U1-202006 012 631
- DE-U1-202011 109 214
- US-A- 5 746 114
- US-A1- 2005 095 430
- US-B1- 8 362 906
- Anonymous: "Multimedia Countertop Lamps : Electrolux Ice", , 2 juin 2015 (2015-06-02), XP055279784, Extrait de l'Internet: URL:https://web.archive.org/web/2015060206 4726/http://www.trendhunter.com/trends/ele ctrolux-ice [extrait le 2016-06-10]
- JU W ET AL: "CounterActive: An Interactive Cookbook for the Kitchen Counter", PROC. OF 2001 CONFERENCE ON HUMAN FACTORS IN COMPUTING SYSTEMS,, PAGE(S) 269 - 270 , 1 avril 2001 (2001-04-01), XP007906856, ISBN: 978-1-58113-340-0 Extrait de l'Internet: URL:http://www.media.mit.edu/pia/counterac tive/counteractive-final.pdf
- Anonymous: "Living Kitchen 2015: Die Highlights | eKitchen", , 22 janvier 2015 (2015-01-22), XP055279772, Extrait de l'Internet: URL:http://www.ekitchen.de/kuechengeraete/ news/living-kitchen-2015-44771.html [extrait le 2016-06-10]
- Anonymous: "Beeindruckende neue Küchenwelt | Blog | SCHOTT CERAN", , 27 janvier 2015 (2015-01-27), XP055281217, Extrait de l'Internet: URL:http://www.schott-ceran.com/blog/beein druckende-neue-kuechenwelt/ [extrait le 2016-06-16] & Anonymous: "Beeindruckende neue Küchenwelt | Blog | SCHOTT CERAN", , 27 janvier 2015 (2015-01-27), XP055281228, Extrait de l'Internet: URL:http://www.schott-ceran.com/blog/wp-co ntent/uploads/2015/01/Kueche_Der_Zukunft.j pg [extrait le 2016-06-16]
- BauknechtGlobal: "IMM /LivingKitchen 2015 Köln - Bauknecht Interaktive Kochfläche/Interactive Cooktop (Deutsch)", YouTube, 27 janvier 2015 (2015-01-27), pages 1-1, XP054976592, Extrait de l'Internet: URL:https://www.youtube.com/watch?v=67bcI0 XrIf8 [extrait le 2016-06-15]
- WHIRLPOOL USA: "Whirlpool Interactive Cooktop at CES 2014", INTERNET CITATION, 9 janvier 2014 (2014-01-09), page 1, XP002734990, Extrait de l'Internet: URL:https://www.youtube.com/watch?v=6frHH5 OtXU4 [extrait le 2015-01-26]
- Diana Barile: "0204 Supersedes All Previous Releases Product Information", , 16 novembre 2004 (2004-11-16), pages 1-2, XP055279700, Extrait de l'Internet: URL:http://atkinsonsmirrorandglass.com/wp- content/uploads/2013/05/ROBAX-tech-specs.p df [extrait le 2016-06-10]
- Schott: "SCHOTT ROBAX HOME TECH SCHOTT ROBAX Transparent glass ceramics for extreme temperature", , 12 avril 2005 (2005-04-12), pages 1-30, XP055279645, Extrait de l'Internet: URL:http://usktr.com/schott_robax.pdf [extrait le 2016-06-10]
- Lux Glass: "Glass Worktops & Glass Cooker Splashbacks - Lux Glass", , 20 février 2015 (2015-02-20), XP055279600, Extrait de l'Internet: URL:https://web.archive.org/web/2015022001 3836/http://www.luxglassuk.co.uk/glass-wor ktops.php [extrait le 2016-06-10]
- Lux Glass: "Gallery of Our Work - Lux Glass", , 1 juillet 2015 (2015-07-01), XP055279607, Extrait de l'Internet: URL:https://web.archive.org/web/2015070117 0915/http://www.luxglassuk.co.uk/gallery.p hp [extrait le 2016-06-10]
- Anonymous: "Glass Worktops for Kitchens including a nationwide template and installation service", , 12 juillet 2015 (2015-07-12), XP055279618, Extrait de l'Internet: URL:https://web.archive.org/web/2015071201 2520/http://www.kitchencalm.co.uk/glasshom e.htm [extrait le 2016-06-10]
- Anonymous: "Kitchen Splashbacks in Glass and Kitchen Worktops in Glass - Technical Data", , 22 juillet 2015 (2015-07-22), XP055279621, Extrait de l'Internet: URL:https://web.archive.org/web/2015072205 5822/http://www.kitchencalm.co.uk/glasstec hnical.htm [extrait le 2016-06-10]
- Anonymous: "6x3 Designer Italian Glass Office Desk Range, Office Tables and Boardroom Tables", , 12 juillet 2015 (2015-07-12), XP055279632, Extrait de l'Internet: URL:https://web.archive.org/web/2015071200 5149/http://www.laporta.co.uk/products/des ks_6x3.html [extrait le 2016-06-10]
- SCHEIDLER H ET AL: "LI2O-AL2O3-SIO2 GLASS-CERAMICS", AMERICAN CERAMIC SOCIETY BULLETIN, AMERICAN CERAMIC SOCIETY. COLUMBUS, US, vol. 68, no. 11, 1 novembre 1989 (1989-11-01), pages 1926-1930, XP000126064, ISSN: 0002-7812
- Anonymous: "DTiM1000C | Zoneless Piano Induction Hob | Premium Induction Hob", , 15 août 2015 (2015-08-15), XP055281949, Extrait de l'Internet: URL:https://web.archive.org/web/2015081506 3410/http://www.dedietrich.co.uk/premium/9 3cm-zoneless-induction-hob-the-piano-p-200 02126.html?cPath=155_123_138 [extrait le 2016-06-20]
- Bosch: "Bosch PKE611B17E Electric cooktop", , 25 mars 2014 (2014-03-25), XP055281940, Extrait de l'Internet: URL:http://www.plumbingplace.co.uk/skin/co mmon_files/images/ceramic-hob.pdf [extrait le 2016-06-20]
- Lamona: "User & Installation Guide Ceramic 5 Zone Touch Control Hob CONTENTS & INTRODUCTION", , 3 mars 2015 (2015-03-03), XP055281957, Extrait de l'Internet: URL:https://www.howdens.com/media/library/ pdf/2031.pdf [extrait le 2016-06-20]
- Anonymous: "AGA | 5 Oven Total Control Electric Range Cookers", , 6 mai 2015 (2015-05-06), XP055281978, Extrait de l'Internet: URL:http://web.archive.org/web/20150506002 054/http://www.agaliving.com/aga-range-coo kers/range-cookers/aga-total-control/5-ove n-aga-total-control#PRODUCTDETAILSTABARCHT YPE [extrait le 2016-06-20]

## Description

La présente invention concerne un équipement mobilier et/ou ménager ayant au moins une plaque de grandes dimensions positionnée ou destinée à être positionnée horizontalement sur un ou des éléments supports (caisson d'un meuble, pied(s) support(s)) afin d'offrir une surface stable destinée à différents usages. En particulier, la présente invention concerne un meuble présentant une surface ou plateau (généralement horizontal(e) en position d'utilisation) apte à permettre en simultané ou successivement différentes activités et/ou support d'objets (cette surface ou plateau formant ainsi ce qu'on appelle un plan de travail), en particulier pouvant permettre la cuisson ou le réchauffage d'aliments dans des récipients appropriés et offrir d'autres usages.

Les matériaux habituellement utilisés pour réaliser des plans de travail sont par exemple le bois, le quartz, le Corian^{®}, etc. Pour la cuisson d'aliments, il existe par ailleurs des surfaces de cuisson de grandes dimensions dans les cuisines, en particulier à usage professionnel, ces plaques étant généralement métalliques et/ou composites. En particulier, il existe des panneaux multicouches, à base de couches ou matériaux céramiques tels que le grès, de couches ou matériaux métalliques de type aluminium et de couches ou matériaux plastiques isolants de type Bakélite, ces panneaux présentant généralement une épaisseur importante (de l'ordre de 12 mm par exemple) et étant de réalisation complexe.

Parallèlement, des plans de cuisson en matériaux de type vitrocéramique ou verre renforcé, de dimensions plus limitées (en particulier de surface généralement inférieure à 0.4 m², des plaques de surface supérieure pouvant être plus difficiles à obtenir par les procédés habituellement utilisés, et pouvant poser des problèmes en terme de planéité, manutention, etc), existent, pour des usages en particulier domestiques, l'utilisation de matériau vitrocéramique s'étant généralisé ces dernières années pour les plaques de cuisson, en raison notamment des performances de ce matériau pour cet usage et de l'aspect attractif des plaques réalisées.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants. Les plaques ainsi conçues sont destinées exclusivement à l'usage en tant que plaques de cuisson et ne sont traditionnellement pas destinées à recevoir d'autres objets que les ustensiles résistants à la chaleur utilisés pour la cuisson d'aliments, ni destinées à l'exercice d'autres activités que la cuisson d'aliments.

Le document EP 2 217 036 décrit un plan de travail pour cuisine incluant une plaque de cuisson. Le plan de travail est formé d'un substrat en matériau verrier de préférence un verre de sécurité mono-substrat. Le substrat peut comprendre différents revêtements fonctionnels.

La présente invention a cherché à élargir la gamme des produits d'équipement ménagers existants, à usage domestique ou professionnel, en mettant au point un nouveau type de produits interactifs permettant des usages plus variés.

Ce but a été atteint par le nouvel équipement ou article ou installation selon l'invention, avantageusement interactif, cet équipement mobilier/ménager (ou meuble) comprenant :
- au moins un plan (ou comptoir ou table) de travail formé d'au moins un substrat (en particulier plaque ou surface ou plateau), en (ou (à base) d'un ou essentiellement constituée d'un) matériau verrier (de préférence en vitrocéramique) transparent monolithique (ou monobloc ou d'un seul tenant), avantageusement essentiellement plan, de surface (longueur par largeur de sa face de plus grandes dimensions) supérieure à 0.7 m², ledit substrat présentant une transmission lumineuse T_{L} supérieure à 60% et un indicateur d'opacité compris entre 5 et 90, ledit substrat étant en particulier (majoritairement voire entièrement) nu (non revêtu ou muni de revêtement(s) sur une partie limitée de sa surface, en particulier sur moins de 10% de sa surface) ou muni de revêtement(s) tel(s) que le substrat ainsi revêtu présente un flou inférieur à 15 % et/ou une transmission lumineuse T_{L} supérieure à 60% et/ou un indicateur d'opacité inférieur à 85,
- au moins un élément de chauffage (en particulier sous le substrat et caché par celui-ci lorsque cet élément de chauffage n'est pas en fonctionnement/est au repos),
- au moins une source lumineuse, en particulier destinée à matérialiser (rendre visible) une ou des zones (telles que les zones de chauffe) ou un ou des éléments ou affichages (par exemple un indicateur d'état de marche ou un indicateur de puissance) du substrat, cette source se trouvant en particulier à l'aplomb du substrat pour un affichage par projection, ou sous le substrat pour un affichage par transmission au travers du substrat,
- au moins une interface de communication avec au moins un élément extérieur (hors du plan), par exemple avec un module (une unité, un dispositif) extérieur pour une communication sans fil,
- et un élément, notamment (essentiellement) plan, rapporté au substrat ou plan de travail, en particulier de façon que l'ensemble, formé par le substrat (nu ou le cas échéant revêtu) ou plan de travail et l'élément rapporté, présente un flou supérieur à 15 %, et/ou une transmission lumineuse T_{L} inférieure à 50%, et/ou un indicateur d'opacité supérieur à 85.

Le produit mis au point selon l'invention répond au but recherché, la présente invention proposant ainsi un équipement nouveau interactif (permettant notamment l'activation de fonctions telles que la cuisson d'aliments, et l'affichage de zones ou données) pouvant tout aussi bien être utilisé en cuisine que dans une autre pièce à vivre, le plan de travail pouvant faire partie d'un meuble plein ou non, d'une table, d'un comptoir, etc, ce plan de travail étant monté ou apte à être monté horizontalement sur (en particulier au sommet de) un ou des éléments supports (caisson d'un meuble, pied(s) support(s)) afin d'offrir une surface stable destinée à différents usages, le plan de travail ou l'équipement selon l'invention présentant une surface supérieure continue apte à permettre en simultané ou successivement des activités (telles que travail, jeux, lecture, etc.), le support d'objets (tels que papiers, ordinateurs, vases, vaisselle, etc.), et la préparation ou la cuisson ou le réchauffage d'aliments dans des récipients appropriés.

Comme indiqué précédemment, le plan de travail est formé d'un substrat ou plaque en matériau verrier monolithique (le matériau verrier ayant été formé d'un seul bloc/en une seule pièce, même si le substrat peut le cas échéant présenter des évidements, généralement pratiqués dans la pièce déjà formée, à des fins esthétiques ou fonctionnelles) de grandes dimensions, l'avantage d'une telle plaque monolithique de grandes dimensions étant notamment d'offrir une surface majoritairement continue/uniforme/sans raccords, esthétique et d'entretien facile, ainsi qu'un plus grand confort d'utilisation et une plus grande sécurité (en matière d'étanchéité en cas de renversement de liquide, etc. ), etc. Le substrat consiste essentiellement, voire uniquement, en le matériau verrier, ce substrat/matériau verrier pouvant le cas échant être muni de revêtements de décoration ou fonctionnels de faible épaisseur (notamment de l'ordre de quelques dizaines de nanomètres à quelques centaines de microns, voire plus), par exemple en émail, peinture, couches minces, etc, ce ou ces revêtements couvrant une partie limitée de sa surface, c'est-à-dire avantageusement moins de 10%, en particulier moins de 5%, notamment moins de 1%, de sa surface, et/ou étant tel(s) que le substrat muni de ce(s) revêtement(s) présente un flou inférieur à 15 % et/ou une transmission lumineuse T_{L} supérieure à 60% et/ou un indicateur d'opacité inférieur à 85, comme précisé précédemment.

Contrairement à l'usage dans les vitrocéramiques notamment, ce (substrat en) matériau verrier est de grandes dimensions, sa surface (correspondant au produit de sa longueur par sa largeur pour sa face de plus grandes dimensions - généralement sa face supérieure, destinée à être apparente et à servir de support d'articles (ménagers ou de travail ou de cuisson) étant de dimensions supérieures à 0.7 m², de préférence supérieures à 0.9 m², notamment supérieures à 1 m², en particulier supérieures ou égales à 2 m². Or la fabrication de grandes plaques, dans le cas de la vitrocéramique notamment, pose de nombreux problèmes en matière de planéité et de manipulation. Dans la présente invention, une plaque de grandes dimensions, présentant pourtant une bonne planéité, peut néanmoins être avantageusement obtenue en réduisant la vitesse de passage (ou rallongeant l'arche de céramisation ou augmentant le temps de séjour dans l'arche) par rapport à la vitesse (ou à la longueur de l'arche ou au temps standards) habituellement utilisée pour obtenir des plaques vitrocéramiques de dimensions usuelles inférieures à 0.4 m², comme explicité ultérieurement dans le procédé selon l'invention.

Dans la présente invention, le substrat en matériau verrier forme ainsi avantageusement la majeure partie (au moins 50%), voire la totalité, du plan de travail ou de sa surface ou face destinée à servir à divers usages (généralement face supérieure en position d'utilisation). En particulier, le substrat en matériau verrier occupe avantageusement dans la présente invention au moins 50%, notamment au moins 70%, en particulier au moins 90% de la surface (mesurée généralement en face supérieure, destinée à être apparente et à servir de support d'articles) du plan de travail, et généralement il occupe toute la surface du plan de travail, la surface du plan de travail s'entendant comme la surface pleine occupée par le plan de travail (surface qu'il occupe en excluant celle(s) occupée(s) par des évidements éventuels (tel qu'un évidement dans le plan pour intégrer un évier)) sur la face considérée (généralement sa face supérieure, destinée à être apparente et à servir de support d'articles), voire s'entendant en particulier comme la surface globale correspondant au produit de la longueur du plan de travail par sa largeur). Selon le type de meuble (notamment dans le cas d'un meuble où le plan de travail occupe l'intégralité d'une de ses faces, généralement la face supérieure, par exemple une table, un îlot central ou un simple plan de travail), le substrat en matériau verrier peut ainsi occuper également au moins 50%, notamment au moins 70%, en particulier au moins 90% de la surface d'une face, en particulier de la face supérieure (en position d'utilisation), du meuble, voire occuper toute ladite surface.

Avantageusement, le substrat en matériau verrier forme au moins 50%, notamment au moins 70%, en particulier au moins 90%, voire la totalité, du plan de travail, ou en d'autres termes, le plan de travail (généralement en face supérieure ou formant la face supérieure du meuble) est principalement (à au moins 50%, notamment au moins 70%, en particulier au moins 90%), en particulier entièrement (ou uniquement) formé du (ou constitué du, ou consiste en le) substrat en matériau verrier (ce matériau verrier étant préférentiellement de la vitrocéramique).

Le substrat/matériau verrier selon l'invention est avantageusement plan (ou majoritairement ou quasiment plan), et présente en particulier une planéité (hauteur entre le point le plus haut et le point le plus bas du substrat par rapport au plan moyen du substrat, à l'exception des déformations volontaires éventuelles opérées sur le substrat à des fins esthétiques ou fonctionnelles) inférieure à 0,1% de la diagonale du substrat, et de préférence inférieure à 3 mm, notamment inférieure à 2 mm, en particulier inférieure à 1 mm, voire de l'ordre de zéro, en fonction de la taille/surface/diagonale du substrat, la planéité étant mesurée à l'aide d'un ondulomètre de référence SurFlat commercialisé par la société Visuol. Le substrat est généralement de forme géométrique, en particulier rectangulaire, voire carrée, voire circulaire ou ovale, etc., et présente généralement une face "supérieure" (face visible) en position d'utilisation, une autre face "inférieure" (généralement cachée, dans le châssis ou caisson du meuble incorporant le plan de travail) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés (ces formes ayant été ajoutées lors de la fabrication du substrat, par exemple par laminage ou effondrement ou pressage, etc., ou ayant été ajoutées en reprise), etc, ces variations de forme constituant avantageusement des variations continues de la plaque (sans changement de matériaux ou raccords). La face inférieure peut être notamment lisse ou munie de picots augmentant sa résistance mécanique et obtenus par exemple par laminage.

L'épaisseur du substrat monolithique en matériau verrier utilisé est généralement d'au moins 2 mm, notamment d'au moins 2.5 mm, en particulier est de l'ordre de 3 à 30 mm, et avantageusement est inférieure à 15 mm, en particulier est de l'ordre de 3 à 15 mm, notamment de 3 à 10 mm.

Le matériau verrier du substrat utilisé est avantageusement résistant à haute température et/ou présente un coefficient de dilatation nul ou quasi-nul (par exemple inférieur à 15.10⁻⁷ K⁻¹), en particulier est avantageusement de la vitrocéramique ou un verre renforcé (notamment trempé chimiquement ou thermiquement). De préférence, le substrat est un substrat en vitrocéramique et peut être par exemple du type des plaques commercialisées sous le nom KeraLite par la société Eurokera. Comme défini selon l'invention, le matériau verrier est avantageusement transparent, en particulier présente une transmission lumineuse T_{L} supérieure à 10%, ainsi qu'un indicateur d'opacité compris entre 5 et 90, de préférence compris entre 5 et 85. Dans un mode de réalisation avantageux, il présente une transmission lumineuse T_{L} comprise entre 10% et 20% ; dans un autre mode avantageux, il présente une transmission lumineuse T_{L} supérieure à 60%, en particulier supérieure à 70%.

La vitrocéramique utilisée peut être notamment de composition telle que décrite dans les demandes de brevets publiées sous les numéros suivants : WO2013171288, US2010167903, WO2008065166, EP2086895, JP2010510951, EP2086896, WO2008065167, US2010099546, JP2010510952, EP0437228, cette vitrocéramique étant en particulier une vitrocéramique d'aluminosilicate de lithium.

La vitrocéramique peut être affinée à l'arsenic (c'est-à-dire de (verre mère de) composition comprenant de l'ordre de 0.2 % à 1.5% en poids d'oxyde d'arsenic (exprimé en As₂O₃), ou peut être non affinée à l'arsenic (en particulier présentant un taux d'oxydes d'arsenic inférieur à 0.2 %, en particulier inférieur à 0.1%, voire nul) ou affinée à l'étain ou affinée au(x) sulfure(s), et peut être obtenue par laminage ou par flottage.

Le matériau verrier peut être également un verre trempé non céramisé, par exemple un aluminosilicate de lithium trempé et coloré dans la masse tel que décrit dans les demandes de brevets publiées sous les numéros suivants :FR1060677, WO2012080672, ou encore un verre trempé d'un autre type (sodo-calcique, borosilicate, etc), par exemple tel que décrit dans la demande publiée sous le numéro WO2012146860.

La vitrocéramique ou le verre trempé sont obtenus par les procédés respectifs décrits dans les documents précités en utilisant les cycles et températures de traitement permettant d'obtenir le matériau verrier présentant les caractéristiques sélectionnées données dans la définition de l'invention. Dans le cas des vitrocéramiques, ces procédés sont de préférence modifiés en réduisant la vitesse de passage d'au moins 25%, de préférence d'au moins 50%, ou en augmentant la longueur de l'arche de céramisation ou le temps de séjour dans ladite arche d'au moins 25%, de préférence d'au moins 50%, par rapport respectivement aux vitesses, longueurs et temps normalement utilisés, afin d'obtenir un substrat plan de grandes dimensions comme requis selon l'invention, comme explicité ultérieurement. Le substrat en vitrocéramique transparente comprend généralement des cristaux de structure β-quartz au sein d'une phase vitreuse résiduelle, la valeur absolue de son coefficient de dilatation étant avantageusement inférieure ou égale à 15.10⁻⁷/°C, voire à 5.10⁻⁷/°C, cette vitrocéramique étant par exemple celle des plaques commercialisées sous le nom KeraLite par la société Eurokera.

Le matériau verrier peut le cas échéant comprendre également des colorants donnant des colorations particulières au substrat, par exemple de l'oxyde de vanadium, de l'oxyde de fer, de l'oxyde de cobalt, de l'oxyde de cérium, de l'oxyde de sélénium, de l'oxyde de chrome, voire de l'oxyde de nickel, de l'oxyde de cuivre et/ou de l'oxyde de manganèse, etc..

Comme indiqué dans la définition de l'invention, le substrat/matériau verrier est nu ou pourvu d'un revêtement comme précédemment défini dans l'invention, ce substrat étant en outre couplé à un élément rapporté au substrat ou plan de travail, comme indiqué précédemment, cet élément rapporté pouvant servir par exemple de renfort, ou de moyen de masquage destiné à masquer au moins une partie des éléments sous-jacents (moyens de chauffage notamment), et/ou le cas échéant pouvant permettre de conférer une opacité/faible transmission et/ou un flou propices à l'affichage par transmission lumineuse au travers du substrat ou à l'affichage par projection lumineuse à la surface du substrat formant écran, comme explicité ultérieurement. Par couplé, on entend que l'élément modifie les caractéristiques, par exemple optiques ou de résistance, du substrat pour son utilisation comme plan de travail ou dans l'équipement selon l'invention. Par rapporté, on entend fabriqué séparément du substrat (contrairement à un revêtement obtenu par dépôt direct sur le substrat), cet élément pouvant ensuite être combiné au substrat ou au plan de travail par collage, soudure, etc, cet élément pouvant le cas échéant se trouver à distance du substrat (par exemple de un à quelques millimètres en dessous), et non apposé à ou contre ou sur ledit substrat.

Le revêtement, lorsqu'il est présent sur le substrat, peut le cas échéant se présenter sous forme d'au moins une couche d'émail ou de peinture ou de couches minces, sur moins de 10% de la surface du substrat ou de façon que le substrat muni du revêtement présente un flou inférieur à 15 % et/ou une transmission lumineuse T_{L} supérieure à 60% et/ou un indicateur d'opacité inférieur à 85 comme précédemment défini.

L'élément rapporté peut être par exemple une plaque ou feuille de mica, de bois, de contreplaqué, de stratifié, de plastique (par exemple du PVB- polyvinyl butyral - ou du polycarbonate ou de la Bakélite, etc), de verre, de pierre, etc.en particulier de 0;1 à 100 mm d'épaisseur, et rendue solidaire du substrat par exemple par collage, laminage, calandrage, fixation au même cadre ou à la même armature, l'élément rapporté pouvant être placé contre le substrat ou à distance (le cas échéant à l'aide d'espaceurs, etc.), l'élément rapporté étant avantageusement couplé au substrat en étant sous celui-ci (en position d'utilisation).

Lorsque l'élément rapporté sert par exemple de moyen de masquage destiné à masquer au moins une partie des éléments sous-jacents et/ou permet de conférer une opacité et/ou un flou propices à l'affichage par transmission lumineuse au travers du substrat ou à l'affichage par projection lumineuse à la surface du substrat formant écran, il est choisi préférentiellement de façon que l'ensemble, formé par le substrat (nu ou revêtu comme précédemment défini) ou plan de travail et l'élément rapporté présente un flou supérieur à 15 %, en particulier supérieur à 40%, voire supérieur à 60%, et/ou une transmission lumineuse T_{L} inférieure à 50%, voire inférieure à 30% (cette transmission lumineuse étant notamment non nulle/supérieure à 0) et/ou un indicateur d'opacité supérieur à 85, de préférence supérieur à 90 (et en particulier inférieur à 100) sur l'essentiel (en particulier sur au moins 80%, voire 90%, voire 100%) de sa surface, exception faite d'éventuels décors localisés ou composants localisés appliqués à sa surface. Lorsque l'élément rapporté sert de renfort, il est choisi par exemple pour sa bonne résistance, etc.

Le flou mesure le niveau de diffusion lumineuse et est défini, dans le cadre de l'invention, comme étant le rapport de la transmission diffuse sur la transmission totale à une longueur d'onde égale à 550 nm, ce flou étant évalué par exemple à l'aide du spectrophotomètre muni d'une sphère intégrante utilisé pour les mesures de transmission lumineuse.

La transmission lumineuse T_{L} est mesurée selon la norme ISO 9050 :2003 en utilisant l'illuminant D65, et est la transmission totale (intégrée dans le domaine du visible), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003.

L'indicateur (ou facteur ou coefficient) d'opacité Ω est déterminé dans la présente invention par la formule Ω = 100 - ΔE* et est évalué en mesurant (colorimétrie en réflexion effectuée à l'aide d'un colorimètre Byk-Gardner Color Guide 45/0) la variation de couleur ΔE*, correspondant à la différence entre la couleur, mesurée en réflexion sur la face supérieure du substrat ou de l'ensemble évalué, pour le substrat (respectivement l'ensemble) posé sur fond noir opaque et celle pour le substrat (respectivement l'ensemble) posé sur fond blanc opaque (ΔE* = ((L_{N}*-L_{B}*)² + (a_{N}*-a_{B}*)² + (b_{N}*-b_{B}*)²)^{½} selon la formule établie en 1976 par la CIE, L_{B}*,a_{B}*,b_{B}* étant les coordonnées colorimétriques de la première mesure sur fond blanc et L_{N}*,a_{N}*,b_{N}* étant celles de la seconde mesure sur fond noir dans le système colorimétrique établi en 1976 par la CIE).

L'ensemble formé par le substrat et l'élément rapporté éventuel selon l'invention permet le cas échéant un affichage par projection comme explicité ultérieurement, en particulier, en combinaison avec des sources lumineuses placées au-dessus, permet d'afficher des zones lumineuses pour signaler notamment les zones de cuisson lorsqu'elles sont en état de marche, et/ou permet le cas échéant un affichage par transmission lumineuse par des sources placées en dessous, cet ensemble masquant dans un même temps les éléments placés en dessous (tels que les éléments de chauffe et câbles).

Comme défini précédemment, l'article selon l'invention comprend également au moins un élément de chauffage (ou élément chauffant), par exemple un ou des foyers radiants ou halogènes ou un ou plusieurs brûleurs à gaz et/ou un ou plusieurs moyens de chauffage par induction, ces moyens de chauffage étant généralement situés sous le plan de travail. Le plan de travail de l'article selon l'invention peut comporter un ou plusieurs éléments de chauffage, de même qu'un ou plusieurs feux. Par le terme « feu », on entend un emplacement de cuisson. L'article selon l'invention peut comporter plusieurs types d'éléments de chauffage ou feux (feux à gaz, feux radiants, halogènes ou à induction). De préférence, l'article selon l'invention comprend comme élément(s) de chauffage un ou plusieurs moyens de chauffage par induction.

Le ou les moyens de chauffage peuvent être localisés dans une zone définie (par exemple sur une extrémité du substrat) ou plusieurs zones du substrat, ou peuvent être uniformément répartis sous le substrat, occupant par exemple au moins 25% de la surface du substrat, voire peuvent occuper une surface quasi-équivalente à celle du substrat (par exemple plus de 50 %, notamment plus de 75%, voire plus de 85%, voire 100% de la surface principale du substrat), une pluralité d'inducteurs de petites dimensions tapissant par exemple le substrat sous sa face inférieure, pour permettre un chauffage au besoin dans n'importe quelle zone.

Les emplacements de cuisson sur le plan de travail, à l'aplomb des moyens de chauffage, peuvent être le cas échéant signalés (ou non, dans le cas par exemple de l'utilisation d'un substrat nu ou dans le cas d'un plan muni de moyens de chauffage couvrant l'ensemble de sa superficie), sur activation et/ou en permanence, notamment au moyen respectivement d'une ou plusieurs sources lumineuses et/ou au moyen d'une décoration fixe, par exemple en émail. Les dimensions des motifs permettant de signaler les zones de cuisson (de même que celles de motifs pouvant signaler d'autres zones ou fonctions) peuvent être plus ou moins importantes, par exemple il peut s'agir de cercles délimitant chacun des éléments de chauffage, ou de petits motifs (triangles, croix, etc.) en leur centre ou à leur base, etc.

De préférence, les emplacements de cuisson (et/ou le cas échéant d'autres zones et/ou éléments et/ou fonctions et/ou décorations) sont signalés par au moins une source lumineuse telle qu'évoquée dans la définition de l'invention, cette source une fois activée indiquant par exemple l'emplacement à l'aide d'un motif lumineux (notamment de type disque, cercle, croix, triangle, etc.) de couleur et/ou de dimensions fixes ou variables. Alternativement, ils peuvent être indiqués en permanence, par un motif (notamment de type rond cercle, croix, triangle, etc.) fixe, obtenu notamment par dépôt de couche(s) (en particulier telle(s) que celle(s) utilisée(s) pour la décoration de vitrocéramiques), par exemple en émail ou peinture, à la surface de la plaque (notamment en face supérieure, ou éventuellement inférieure selon le type de revêtement)).

Dans un mode de réalisation préféré, et notamment lorsque l'ensemble formé par le substrat et l'élément rapporté est opaque ou de très faible transmission lumineuse (notamment inférieure à 5%), le ou les emplacements de cuisson (et/ou le cas échéant d'autres zones et/ou éléments et/ou fonctions et/ou décorations) sont signalés par, et/ou mis en évidence à l'aide de ou au moyen de, au moins une source lumineuse telle qu'évoquée dans la définition de l'invention, sur activation de ladite source, ladite source se trouvant au-dessus (en position d'utilisation) ou du côté de la face apparente du substrat (ou encore du côté où l'affichage est recherché ou doit être vu) et permettant un affichage lumineux par projection (directe) sur cette surface/face formant écran.

Dans un autre mode de réalisation, pour un ensemble (formé par le substrat et l'éventuel élément rapporté) présentant une transmission lumineuse T_{L} d'au moins 5%, le ou les emplacements de cuisson (et/ou le cas échéant d'autres zones et/ou éléments et/ou fonctions et/ou décorations) peuvent (également ou alternativement) être signalés par, et/ou mis en évidence à l'aide de ou au moyen de, au moins une source lumineuse telle qu'évoquée dans la définition de l'invention, sur activation de ladite source, ladite source étant placée sous l'ensemble (en position d'utilisation) et étant cachée par celui-ci au repos, ladite source permettant un affichage lumineux par transmission au travers du plan de travail.

Une ou des sources lumineuses peuvent également permettre l'affichage d'autres éléments ou fonctions, par exemple l'affichage de moyens ou zones de commande (sous forme de touches, logos, voire claviers, etc.) ou d'indicateurs (d'intensités/de puissance, de temps, etc.), activables par exemple par contact sur la surface du plan (à l'aide par exemple de capteurs situés sous la surface) ou à distance (notamment par communication sans fil), voire par simple mouvement de la main (par capteurs ou détecteurs situés le cas échéant à l'extérieur et enregistrant le mouvement, par exemple par triangulation, pour le convertir, à l'aide notamment d'un algorithme et d'une interface adaptés, en l'activation d'une fonction par exemple), ou le cas échéant par la pose d'un objet déterminé (casserole, etc.) à un emplacement déterminé (telle qu'une zone de cuisson) de la plaque. La ou les sources lumineuses peuvent également permettre l'affichage de décors, ou de données diverses (affichage par exemple de pages d'ordinateurs, de recettes de cuisine, etc.) téléchargées par exemple par communication sans fil en utilisant une interface appropriée et projetées ou transmises à partir des sources lumineuses à la surface de la plaque.

Le cas échéant, l'article selon l'invention peut comprendre plusieurs sources lumineuses, pour l'éclairage de plusieurs zones ou pour l'affichage de textes ou décors complexes, ou pour homogénéiser l'éclairage, ces sources pouvant être disposées suivant des axes et des angles d'éclairage différents pour obtenir l'effet voulu, sans reflets ou ombrages indésirables. En particulier dans l'éclairage par projection sur le plan formant écran, plusieurs sources sont par exemple disposées de façon que l'angle entre chaque source (ou entre chaque élément, par exemple miroir, envoyant la lumière vers le plan de travail) et la normale au plan de travail soit compris entre 5 et 60°, de préférence entre 30 et 45° pour minimiser les effets d'ombres projetées par une personne opérant sur le plan de travail.

La ou les sources lumineuses peuvent être avantageusement formées par des diodes électroluminescentes, pour des raisons notamment d'encombrement, d'efficacité, de pérennité et de résistance aux conditions environnantes (chaleur...), et/ou peuvent être d'autres types de sources, par exemple lampes halogènes ou à incandescence, lasers ou écrans à cristaux liquides, les sources pouvant le cas échéant être utilisées en combinaison avec des lentilles ou miroirs, etc.

Les diodes sont avantageusement de type puce(s) semi conductrice(s), en matériaux minéraux (DEL ou LED en anglais), émettant notamment dans une direction, et peuvent être encapsulées, c'est-à-dire comprendre un composant semi-conducteur et une enveloppe (par exemple en résine type époxy ou nylon), encapsulant le composant semi-conducteur. Ces diodes peuvent aussi être des puces semi-conductrices sans lentilles de collimation par exemple de taille de l'ordre de la centaine de µm ou du mm, éventuellement avec une encapsulation minime (par exemple de protection).

Les diodes peuvent le cas échéant être portées par un support ou barrette ou embase, cette embase pouvant présenter une surface (plane ou inclinée) traitée et/ou rendue réfléchissante pour une meilleure efficacité lumineuse, par exemple revêtue d'une laque ou peinture et/ou couche miroir, et/ou couplée à un réflecteur blanc ou métallique pour mieux diriger le rayonnement émis.

Le cas échéant, on peut également utiliser des diodes électroluminescentes organiques (OLED), consistant notamment en une superposition de couches semi-conductrices organiques entre des électrodes, et produisant différentes couleurs au pixel près suivant le cheminement de l'électricité à travers les couches organiques.

L'assemblage de chaque source ou des sources (au substrat ou à un support, par exemple à une partie de l'équipement ou une partie extérieure (associée audit équipement) telle qu'un rail ou un dispositif suspendu au-dessus du plan de travail (ce dispositif pouvant également inclure d'autres composants tels qu'une hotte, la ou les sources pouvant être notamment intégrées dans cette hotte)), peut se faire par soudure, clipsage, collage, etc, le cas échéant par l'intermédiaire d'un autre élément ; par exemple, on peut monter des diodes, soudées sur un support lui-même logé au fond d'un profilé métallique, par clipsage ou collage du profilé. Le positionnement de la ou des sources (par rapport à la plaque notamment) est adapté pour permettre un affichage sur le substrat (par projection (notamment par le dessus) sur l'ensemble formé par le substrat et l'éventuel élément rapporté servant d'écran, ou au travers du substrat lorsque l'ensemble n'est pas complètement opaque).

Les sources, ainsi que leur alimentation et actionnement, peuvent être dissocié(e)s ou non de façon à permettre un éclairage simultané ou individuel des zones d'éclairage voulues, selon les besoins. Chaque source peut être monochromatique (couleur pure) ou polychromatique (couleur de synthèse).

Par « source lumineuse monochromatique » on entend une source lumineuse présentant un seul pic d'émission dans la gamme des longueurs d'onde visibles et tel que la largeur du pic varie de 1 à 100 nm, préférentiellement de 5 à 50 nm.

Par « source lumineuse polychromatique » on entend une source lumineuse qui présente au moins deux pics d'émission à des longueurs d'onde différentes dans la gamme des longueurs d'onde visibles. La couleur perçue (par la rétine) est alors issue d'un mélange entre les différentes longueurs d'ondes. Il peut s'agir d'une LED, et/ou d'un afficheur à LED(s), avec un spectre d'émission présentant un pic d'émission principal et un autre pic d'émission, par exemple de fluorescence, plus large que le pic principal, et généralement de plus faible intensité. La LED polychromatique émet en particulier selon une première émission (de forte ou de faible intensité) comprise entre 400 et 500 nm et selon une deuxième émission (de forte ou de faible intensité) dans le visible au-delà de 500 nm (cas par exemple de LEDs formées d'au moins un cristal électroluminescent et de phosphore(s) photoluminescent(s)). On peut notamment utiliser comme sources des LEDs blanches, des LEDs à émissions polychromatiques formées par exemple de trois sources monochromatiques d'intensités réglées de manière indépendante de type « RGB » (avec trois sources : rouge, verte et bleue), etc.

Une ou des sources peuvent également être intégrées dans ou couplées à ou combinées à une ou des structure(s) de type afficheur(s) (par exemple à diodes électroluminescentes dits « à 7 segments » ou à cristaux liquides), bandeau ou écran de commande électronique à touches sensitives et affichage digital (le cas échéant par communication sans fils à l'aide d'une interface), ou intégrées dans un autre dispositif tel qu'une hotte aspirante comme indiqué précédemment, etc.

Outre la ou les sources, l'article selon l'invention peut aussi comprendre au moins un guide d'onde destiné à propager la lumière d'une partie à l'autre de l'article (en particulier par réflexion totale interne ou par réflexion métallique), le cas échéant lorsque les sources sont placées sous le plan de travail, chaque source lumineuse étant alors rattachée au guide concerné et coopérant avec celui-ci en émettant en son sein son rayonnement lumineux afin que le guide le transmette, la ou les sources lumineuses émettant/étant couplées par exemple par la tranche ou chant du guide. Ce guide est avantageusement clair ou transparent, et peut être rapporté (assemblé après avoir été conçu séparément) par exemple sous la face inférieure de la plaque. Il peut être organique et/ou plastique (par exemple en polycarbonate ou polyméthacrylate de méthyle PMMA), ou minéral (par exemple il peut être en verre). L'article selon l'invention peut comprendre plusieurs guides dédiés chacun à une ou plusieurs zones d'éclairage, ou un guide unitaire, pourvu le cas échéant d'ouvertures. L'assemblage du guide peut se faire directement sur le substrat ou sur une autre partie de l'équipement ou d'un support, par exemple peut être solidarisé au caisson sur lequel repose le plan de travail. Le guide permet, entre autres, de mieux conduire la lumière jusqu'aux zones d'éclairage voulues.

Dans le cas notamment où une ou des sources sont placées sous le plan de travail, le cas échéant associées à au moins un guide d'onde, l'équipement peut également comprendre dans la zone d'éclairage, au moins un moyen d'extraction du rayonnement émis par la ou les sources, par exemple un ou des éléments ou traitement(s) diffusants, en particulier une couche rapportée sur la surface et/ou tout traitement ou texturation différentielle de la surface (local ou sur toute la surface) du guide d'onde ou de la surface d'extraction, comme la gravure laser, l'impression d'émail, l'attaque chimique (acide..) ou mécanique (sablage...), etc. Une surface d'extraction peut le cas échéant être prévue dans l'épaisseur du guide, suivant par exemple une technologie de gravure interne par laser. La géométrie et la rugosité du bord d'un guide d'onde peuvent également être travaillés pour permettre une extraction locale et contrôlée de la lumière. Le ou les moyens d'extraction permettent d'extraire les rayonnements du guide vers la zone d'éclairage voulue. Ils peuvent être combinés le cas échéant avec un autre traitement permettant de cibler les zones d'éclairage, par exemple avec une sérigraphie occultante (masquant certaines zones et empêchant le passage de la lumière) déposée sur une partie d'une face du substrat.

Le cas échéant, l'équipement peut également comprendre au moins un filtre (couplé (en fonctionnement) à au moins une source, de façon à former une zone lumineuse colorée de couleur choisie, ce filtre étant positionné généralement entre la source et la plaque et pouvant notamment être combiné (ou solidarisé) à la source et/ou à un autre élément intermédiaire et/ou à la plaque.

Par "filtre" on entend un filtre optique (à action sur la transmission de la lumière), en particulier coloré (l'action sur la transmission de la longueur d'onde se faisant en fonction des longueurs d'onde), ce filtre étant en particulier un élément ou matériau, généralement plan, notamment sous forme de film ou couche ou composite, à base d'au moins un matériau organique ou minéral, (semi-)transparent (dans le sens notamment où il est transparent à certaine(s) longueur(s) d'onde du visible et non transparent à/en bloquant/en affectant d'autre(s)), en particulier permettant d'absorber et/ou de réfléchir et/ou de réémettre certaines longueurs d'onde du spectre visible. Ce filtre peut être notamment un filtre par absorption (l'action sur la transmission de la lumière se faisant par absorption à certaines longueurs d'onde, la lumière absorbée pouvant notamment être convertie en chaleur et/ou émise à d'autres longueurs d'onde), ou un filtre par réflexion (l'action sur la transmission de la lumière se faisant par réflexion à certaines longueurs d'onde). Le filtre peut être rapporté (fabriqué séparément) et combiné à au moins une source lumineuse et/ou à un autre élément intermédiaire, ou au plan de travail, ou il peut être intégré ou réalisé directement sur ladite source et/ou ledit élément et/ou ledit plan, par exemple sous forme d'une couche imprimée, par exemple par jet d'encre. Le rayonnement émis par la source passe par le filtre correctif afin de produire l'affichage recherché sur ou au travers du substrat auquel cet ensemble est combiné, le filtre pouvant permettre de former différentes couleurs.

L'équipement selon l'invention, selon les sources utilisées (et le cas échéant les filtres utilisés) et leurs emplacements, peut présenter une ou plusieurs zones lumineuses/d'affichage à usage fonctionnel et/ou décoratif, la ou lesdites zones pouvant être dans toute zone de la plaque (y compris zones de chauffe), et l'on peut avoir plusieurs zones lumineuses/d'affichage différenciées (couleur, niveau de luminance), et/ou chaque zone peut elle-même présenter différentes couleurs.

Comme indiqué précédemment, l'équipement selon l'invention comporte également au moins une interface de communication avec au moins un élément du plan (tel que la ou les sources lumineuses et/ou le ou les éléments de chauffage), et/ou avec un élément extérieur du plan, par exemple pour une communication sans fil.

Cette interface de communication (homme-machine ou machine-machine notamment) peut être un dispositif permettant notamment de commander ou transmettre les commandes aux éléments de chauffage et/ou aux sources lumineuses, à partir de ou par l'intermédiaire de boutons ou touches de commande intégrées au plan de travail ou déportées sur un élément extérieur avantageusement amovible ou mobile, dans le cas notamment d'une commande par communication sans fil.

De préférence, l'interface permet la communication sans fil avec une unité extérieure au plan de travail (cette unité pouvant faire partie de l'équipement selon l'invention et pouvant elle-même constituer une interface), permettant par exemple l'activation à distance des zones chauffantes et/ou des sources lumineuses et/ou la commande de différentes fonctions (augmentation ou diminution de la puissance ou du temps de chauffe, affichage de données sur la plan de travail, etc), les commandes données par l'unité extérieure étant transmises par l'interface aux composants concernés de l'équipement. L'interface peut également être une interface de commande située au niveau du plan (bandeau de commande) transmettant les commandes par fils ou éventuellement sans fils à d'autres composants du plan ou hors du plan (par exemple aux sources déportées du plan pour l'éclairage par projection).

L'unité extérieure dans le cas d'une commande à distance peut être par exemple sous forme d'un clavier, d'une tablette ou d'un écran tactile, d'un téléphone mobile, cette unité pouvant être fixe (par exemple fixée sur un mur) ou mobile (pouvant le cas échéant être posée sur le plan de travail). Ce mode de réalisation présente notamment l'avantage d'éviter les traces de doigts (inesthétiques et visibles sur les matériaux verriers) sur le plan de travail ou les zones de cuisson. L'activation des commandes à distance permet également de réduire les risques de brûlures en évitant la manipulation des commandes à proximité des zones de cuisson. Dans un soucis de sécurité notamment, la communication sans fil peut être avantageusement prévue pour être de portée limitée (par exemple limitée au volume de la pièce dans laquelle l'équipement se trouve) et/ou munie de sécurités pour éviter l'activation par mégarde par une personne non présente. La communication sans fils s'effectue en particulier par ondes électromagnétiques ou radioélectriques, le cas échéant à l'aide de systèmes de type Bluetooth, WLAN, wifi, puce RFID, etc.

L'interface peut permettre de transmettre différents signaux initiés par contact ou même par mouvement pour activer différents composants comme déjà évoqué (par exemple elle peut convertir un mouvement, détecté par des capteurs par triangulation, ces capteurs étant reliés à cette interface (et en faisant partie le cas échéant), en l'activation d'une fonction (par exemple l'augmentation de la puissance de chauffe, éclairage des zones de chauffe, etc.). Elle peut également permettre le téléchargement et/ou la transmission de données diverses (telles que pages internet, fonds d'écrans, recettes de cuisine, etc.), ces données étant par exemple transmises à des sources lumineuses permettant en particulier leur affichage à la surface du plan de travail.

Au moins une interface est généralement située sur ou sous le plan de travail ou à proximité. L'équipement selon l'invention peut également comprendre plusieurs interfaces, de même type ou différentes, permettant par exemple l'activation de différents éléments, ou l'équipement peut comprendre plusieurs interfaces, fonctionnant le cas échéant différemment (de constitution différente, opérant à différentes fréquences, etc.) pour piloter un même élément (par exemple une zone de chauffe) avec un niveau renforcé de sécurité. Le cas échéant, il peut être prévu notamment une interface permettant de coordonner l'activation des zones de chauffe avec l'activation des sources lumineuses. L'interface peut être formée de capteur(s), connecteur(s), élément(s) de commande, tout autre composant électrique ou électronique ou électromagnétique, etc..

De préférence, l'équipement selon l'invention comprend au moins une interface de communication avec au moins un élément extérieur pour l'activation de différentes zones et/ou fonctions du substrat par communication sans fil, en particulier lorsque la transmission lumineuse T_{L} du substrat est faible.

Outre l'interface, l'équipement ou le plan de travail peuvent être munis de différents câbles, connecteurs ou autres éléments, notamment électriques contribuant à la transmission de commandes d'une partie à l'autre de l'équipement.

L'équipement, en particulier le plan de travail, selon l'invention peut également comporter divers revêtements fonctionnels et/ou décoratifs comme définis précédemment selon l'invention, notamment parmi ceux généralement utilisés avec les matériaux verriers concernés, par exemple à base d'émail, de peinture, de couche(s) mince(s) (par exemple métallique(s), diélectrique(s), etc.), etc. Par exemple, l'une des faces du substrat peut comporter une ou des couches ou un ou des motifs en émail, à but décoratif et/ou afin de signaler un ou des éléments (afficheurs, zones de cuisson, etc.), et/ou servant de couche colorante et/ou pour d'autres fonctions (comme extracteur de lumière ou pour homogénéiser l'éclairage, etc.). En particulier, le plan de travail peut être muni d'une couche fonctionnelle lui conférant une ou des propriétés supplémentaires telles qu'anti-rayures, renforcement mécanique, anti-traces, anti-débordement, etc. Le revêtement peut être effectué par exemple par des procédés tels que la sérigraphie, le dépôt par pulvérisation cathodique ou pneumatique, le jet d'encre ou d'émail, etc, le revêtement pouvant être appliqué notamment sur la face apparente ou sur la face opposée, selon le type de revêtement et la fonction recherchée.

Comme indiqué précédemment, les décorations (ou au moins une partie d'entre elles) ou affichages du plan de travail peuvent également être obtenus avec avantages par affichage lumineux (plutôt que par dépôt d'un revêtement), en particulier par projection lumineuse sur le plan formant écran, comme déjà évoqué précédemment.

La présente invention concerne également un procédé de fabrication d'un équipement selon l'invention, en particulier du plan de travail dudit équipement, lorsque ce plan de travail est formé d'au moins un substrat en vitrocéramique de surface supérieure à 0.7 m², dans lequel on effectue au moins un cycle de céramisation d'une plaque de verre de surface supérieure à 0.7 m² pour obtenir ledit substrat, et selon lequel on réduit la vitesse de passage d'au moins 25%, de préférence d'au moins 50%, ou on augmente la longueur de l'arche de céramisation ou le temps de séjour dans ladite arche d'au moins 25%, de préférence d'au moins 50%, par rapport respectivement à la vitesse, la longueur ou le temps de séjour optimaux ou usuels pour obtenir un substrat en vitrocéramique de surface inférieure à 0.4 m².

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Alternativement au laminage, le verre peut être flotté, comme décrit par exemple dans la demande de brevet WO2008056080, avant d'être le cas échéant découpé. Les plaques, déjà découpées ou non, sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...). Le procédé peut également comprendre une étape de laminage ou effondrement pour former des reliefs particuliers.

Dans la présente invention, la vitrocéramique suit un cycle de céramisation lui donnant les propriétés recherchées, en particulier un aspect transparent.

D'autres détails et caractéristiques avantageuses ressortiront ci-après de la description d'un mode de réalisation non limitatif de l'invention en référence aux dessins annexés dans lesquels :
- La figure 1 représente une vue schématique en perspective d'un équipement selon l'invention;
- La figure 2 représente une vue schématique de dessus d'un équipement similaire (les ustensiles à la surface ou les éléments sous-jacents de meuble n'étant pas représentés);
- la figure 3 représente une vue schématique de côté dans laquelle un pan du meuble (23) a été enlevé pour laisser apparaitre certains composants de l'équipement.

Dans cet exemple l'équipement (1) selon l'invention comprend un meuble (2) formé d'un caisson (4) surmonté d'un plan de travail (5) formé d'au moins un substrat en vitrocéramique de 3.4 m² de surface, ce substrat occupant la majorité (ici la totalité) de la surface (mesurée en face supérieure) du plan de travail et étant formé d'une plaque (monolithique) vitrocéramique transparente (6), cette plaque/ce substrat en vitrocéramique étant éventuellement couplé(e) à un élément rapporté (10) sous forme d'une plaque de mica de 0.75 mm d'épaisseur, la plaque vitrocéramique étant du type de celle commercialisée sous la référence KeraLite par la société Eurokera, cette plaque présentant une face supérieure lisse et une face inférieure lisse (cette face pouvant également être munie de picots) et une épaisseur de 5 mm, et présentant une transmission lumineuse T_{L} de 87.78%, et un indicateur d'opacité de 26.83 (l'ensemble formé par le substrat et la plaque de mica présentant une transmission lumineuse T_{L} de 0.01%, et un indicateur d'opacité de 100). Le substrat est par exemple obtenu en réduisant dans le procédé de fabrication de vitrocéramiques de type KeraLite la vitesse de passage dans l'arche de céramisation de 50%.

Le substrat en vitrocéramique obtenu présente une planéité de moins de 2 mm (la planéité obtenue étant entre 2 et 3 mm pour une vitesse réduite de 25% seulement, et étant de plus de 15 mm pour une vitesse inchangée par rapport à celle utilisée dans la demande précitée pour obtenir une plaque de dimensions standards inférieure à 0.4 m²), la planéité recherchée pour de bonnes propriétés optiques et de bonnes propriétés de couplage et rendement thermiques notamment, étant inférieure à 3 mm, de préférence inférieure à 2 mm.

L'équipement comprend en outre dans le présent exemple trois éléments de chauffage (7), par exemple des inducteurs, disposés sous la plaque (6). Ces inducteurs sont dans le cas présent répartis au milieu de la surface de travail, mais pourraient tout aussi bien se trouver localisés à une extrémité du plan.

L'équipement comprend également trois sources lumineuses (8), destinées à signaler les emplacements de cuisson et placées au-dessus du substrat (et surplombant le plan de travail). Ces sources permettent de signaler les emplacements de cuisson, à l'aide par exemple d'un disque ou d'un cercle lumineux de couleur (9) délimitant chaque emplacement (les couleurs pouvant le cas échéant être identiques ou différentes selon les emplacements) et entourant les inducteurs, lorsque ces sources sont activées, voire lorsque les éléments de chauffage sont activés si les sources sont connectées audits éléments par une interface appropriée. Les sources (8) sont formées par exemple d'une pluralité de LEDs portées par une embase logée dans un profilé, et sont par exemple intégrées dans une hotte aspirante (14) surplombant le plan de travail. Ces sources outre la signalisation des zones de chauffe, peuvent également ou alternativement servir à l'éclairage (local ou total) du plan de travail, ou à l'affichage par projection de diverses informations, telles que l'affichage de données, de recettes de cuisine (11), etc.

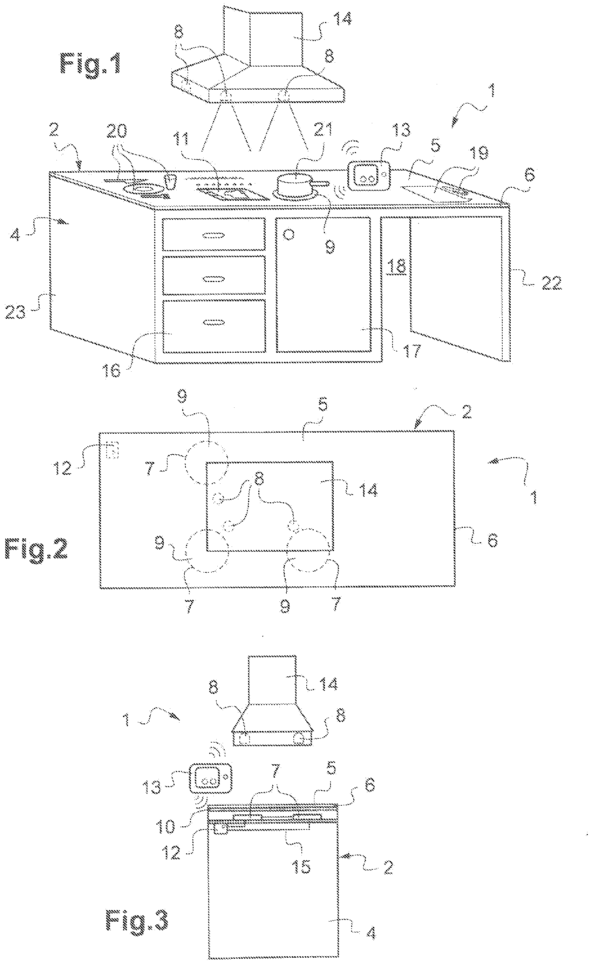

L'équipement comprend en outre au moins une interface de communication (12) (cachée par le substrat) avec les éléments de chauffage, et le cas échéant avec les sources lumineuses, cette interface communiquant également sans fils avec une unité extérieure sous forme, par exemple, d'une tablette tactile (13) pour l'activation de différentes zones et fonctions de la plaque ou de l'équipement. L'unité extérieure peut être avantageusement mobile et reposer sur le plan de travail (figure 1) ou servir pour l'activation à distance (figure 3) de différentes zones ou fonctions. Alternativement ou cumulativement, l'interface pourrait également comprendre ou être reliée à un bandeau de commande fixe situé en surface du substrat (2) pour l'activation de différentes zones et fonctions, en particulier du substrat.

L'équipement comporte également d'autres éléments, notamment des câbles électriques (15) pour l'activation des éléments chauffants et pour l'activation des sources, et comporte des tiroirs (16) ou des placards (17) aménagés dans le caisson supportant le plan de travail, pour le rangement de divers articles, etc. L'équipement peut également comporter d'autres éléments, par exemple le plan de travail peut comporter un encadrement, le substrat peut être revêtu d'un décor, par exemple en émail, le caisson peut être plein ou comporter différents évidements (tel que l'évidement (18), ou intégrer d'autres éléments (par exemple un four encastré, etc.). Le plan de travail (5) peut servir pour différents usages, tels que l'écriture (comme symbolisée par le papier et le stylo (19)), le support d'objets (comme symbolisé par la vaisselle (20)) tout en permettant la cuisson d'aliments (comme symbolisé par les récipients de cuisson (21)), etc. Le cas échéant, le caisson peut également être remplacés par des pieds supports (par exemple uniquement les parois 22 et 23, ou quatre pieds au quatre coins, l'équipement sous le plan de travail dans ce cas étant préférentiellement caché par un coffrage localisé de quelques centimètres d'épaisseur sous le substrat) à l'image d'une table.

L'équipement selon l'invention peut notamment être utilisé avec avantages pour réaliser une nouvelle gamme de meubles multi-usages et intéractifs intégrant notamment des zones ou une fonction de cuisson.

## Revendications

1. Equipement mobilier et/ou ménager (1), interactif, comprenant :
- au moins un plan de travail (5) formé d'au moins un substrat (6) en matériau verrier transparent monolithique de surface supérieure à 0.7 m², ledit substrat présentant une transmission lumineuse T_{L} supérieure à 60%, et un indicateur d'opacité compris entre 5 et 90, ledit substrat (6) étant majoritairement ou entièrement nu ou muni de revêtement(s) tel(s) que le substrat ainsi revêtu présente un flou inférieur à 15 % et/ou une transmission lumineuse TL supérieure à 60% et/ou un indicateur d'opacité inférieur à 85,
- au moins un élément de chauffage (7),
- au moins une source lumineuse (8), en particulier destinée à matérialiser une ou des zones ou un ou des éléments ou affichages du substrat, cette source (8) se trouvant en particulier à l'aplomb du substrat (6) pour un affichage par projection, ou sous le substrat pour un affichage par transmission au travers du substrat,
- au moins une interface de communication (12) avec au moins un élément du plan (5) tel que la ou les sources lumineuses (8) et/ou le ou les éléments de chauffage (7), et/ou avec au moins un élément extérieur pour une communication sans fil,
- et un élément rapporté au substrat (6) ou plan de travail (5), de façon que l'ensemble, formé par le substrat (6) ou plan de travail (5) et l'élément rapporté, présente un flou supérieur à 15 %, et/ou une transmission lumineuse T_{L} inférieure à 50%, et/ou un indicateur d'opacité supérieur à 85.

2. Equipement (1) selon la revendication 1, **caractérisé en ce que** la surface du substrat (6) en matériau verrier est supérieure à 0.9 m², notamment supérieure à 1m², en particulier d'au moins 2 m², l'épaisseur dudit substrat étant d'au moins 2 mm, notamment d'au moins 2.5 mm, en particulier est de l'ordre de 3 à 30 mm, et avantageusement est inférieure à 15 mm, en particulier est de l'ordre de 3 à 15 mm.

3. Equipement (1) selon l'une des revendications 1 ou 2, **caractérisé en ce que** le substrat (6) en matériau verrier occupe au moins 50%, notamment au moins 70%, en particulier au moins 90% de la surface du plan de travail (1).

4. Equipement (1) selon l'une des revendications 1 à 3, **caractérisé en ce que** le substrat (5) est en verre trempé ou en vitrocéramique, et de préférence est en vitrocéramique.

5. Equipement (1) selon l'une des revendications 1 à 4, **caractérisé en ce que** le substrat (5) présente une planéité inférieure à 0,1% de la diagonale du substrat, et de préférence inférieure à 3 mm, notamment inférieure à 2 mm, en particulier inférieure à 1 mm, voire de l'ordre de zéro.

6. Equipement (1) selon l'une des revendications 1 à 5, **caractérisé en ce que** le matériau verrier présente une transmission lumineuse TL supérieure à 70%.

7. Equipement (1) selon l'une des revendications 1 à 6, **caractérisé en ce que** le matériau verrier comprend des colorants.

8. Equipement (1) selon l'une des revendications 1 à 7, **caractérisé en ce que** l'équipement comprend comme élément(s) de chauffage (7) un ou plusieurs moyens de chauffage par induction, le ou les éléments de chauffage pouvant être localisés dans une ou plusieurs zones du substrat, ou être uniformément répartis sous le substrat, occupant par exemple au moins 25% de la surface du substrat, ou occuper plus de 50 %, notamment plus de 75%, voire plus de 85%, de la surface du substrat.

9. Equipement (1) selon l'une des revendications 1 à 8, **caractérisé en ce que** ledit plan de travail (5) comporte des emplacements de cuisson, à l'aplomb des moyens de chauffage (7), et/ou d'autres zones et/ou éléments et/ou fonctions et/ou décorations, signalés, sur activation et/ou en permanence, au moyen d'une ou plusieurs sources lumineuses (8) et/ou au moyen d'une décoration fixe, par exemple en émail.

10. Equipement (1) selon la revendication 9, **caractérisé en ce que** le ou les emplacements de cuisson et/ou d'autres zones et/ou éléments et/ou fonctions et/ou décorations sont signalés par, et/ou mis en évidence ou au moyen de, au moins une source lumineuse (8), sur activation de ladite source, ladite source (8) étant placée au-dessus du substrat (5) ou du côté de la face apparente du substrat (5) ou du côté où l'affichage est recherché ou doit être vu, et permettant un affichage lumineux par projection sur cette face formant écran.

11. Equipement (1) selon l'une des revendications 1 à 11, **caractérisé en ce que** la ou les sources lumineuses (8) ou d'autre(s) composant(s) sont activables par contact sur la surface du plan et/ou sur l'interface et/ou sur une unité extérieure, ou par mouvement, de la main.

12. Equipement (1) selon l'une des revendications 1 à 12, **caractérisé en ce que** l'équipement comprend plusieurs sources lumineuses (8), disposées de façon que l'angle entre chaque source, ou entre chaque élément envoyant la lumière vers le plan de travail, et la normale au plan de travail, soit compris entre 5 et 60°, de préférence entre 30 et 45°, pour minimiser les effets d'ombre projetée par une personne opérant sur le plan de travail (5).

13. Equipement (1) selon l'une des revendications 1 à 13, **caractérisé en ce que** l''interface (12) permet la communication sans fil, en particulier avec une unité extérieure au plan de travail, permettant par exemple l'activation à distance des zones chauffantes (7) et/ou des sources lumineuses (8) et/ou la commande de différentes fonctions, l'unité extérieure étant par exemple sous forme d'un clavier, d'une tablette ou d'un écran tactile ou d'un téléphone mobile, cette unité pouvant être fixe ou mobile, la communication sans fil étant de portée limitée, par exemple limitée au volume de la pièce dans laquelle l'équipement se trouve.

14. Equipement (1) selon l'une des revendications 1 à 14, **caractérisé en ce que** l'interface (12) permet de transmettre différents signaux initiés par contact ou mouvement pour activer différents composants et/ou permet le téléchargement et/ou la transmission de données telles que des pages internet, des fonds d'écrans ou des recettes de cuisine, ces données étant par exemple transmises à des sources lumineuses (8) permettant en particulier leur affichage à la surface du plan de travail (5).

15. Equipement (1) selon l'une des revendications 1 à 15, **caractérisé en ce que** l'équipement comprend une ou plusieurs interfaces, de même type ou différentes, permettant de piloter un ou plusieurs éléments, ou permettant par exemple de coordonner l'activation des zones de chauffe avec l'activation des sources lumineuses.

16. Equipement (1) selon l'une des revendications 1 à 16, **caractérisé en ce que** l'élément rapporté est sous forme d'une plaque de mica, de bois, de contreplaqué, de stratifié, de plastique, de verre ou de pierre.

17. Equipement (1) selon l'une des revendications 1 à 17, **caractérisé en ce que** le plan de travail (5) est monté, horizontalement, sur au moins un ou des éléments supports, tels qu'un caisson (4) d'un meuble (2) ou un ou des pieds supports, formant ainsi avec lesdits éléments supports une table, un meuble, plein ou non, ou un comptoir.

## Patentansprüche

1. Interaktive Möbel und/oder Haushaltsgeräte (1), umfassend:
- mindestens eine Arbeitsplatte (5), die aus mindestens einem Substrat (6) aus monolithischem transparentem Glasmaterial mit einer Oberfläche von mehr als 0,7 m² gebildet ist, wobei das Substrat eine Lichtdurchlässigkeit T_{L} von mehr als 60 % und einen Opazitätsindikator zwischen 5 und 90 aufweist, wobei das Substrat (6) überwiegend oder vollständig blank oder mit Beschichtung(en) versehen ist, wobei das dadurch beschichtete Substrat eine Unschärfe von weniger als 15 % und/oder eine Lichtdurchlässigkeit TL von mehr als 60 % und/oder einen Opazitätsindikator von weniger als 85 aufweist,
- mindestens ein Heizelement (7),
- mindestens eine Lichtquelle (8), die insbesondere dazu bestimmt ist, eine oder mehrere Zonen oder ein oder mehrere Elemente oder Anzeigen des Substrats gegenständlich darzustellen, wobei sich diese Quelle (8) insbesondere senkrecht zum Substrat (6) für eine Anzeige durch Projektion oder unter dem Substrat für eine Anzeige durch Übertragung durch das Substrat befindet,
- mindestens eine Kommunikationsschnittstelle (12) mit mindestens einem Element der Platte (5), wie der einen oder den mehreren Lichtquellen (8) und/oder dem einen oder den mehreren Heizelementen (7), und/oder mit mindestens einem Außenelement für drahtlose Kommunikation,
- und ein Element, das an das Substrat (6) oder an die Arbeitsplatte (5) gebunden ist, sodass die Anordnung, die durch das Substrat (6) oder die Arbeitsplatte (5) und das gebundene Element gebildet wird, eine Unschärfe von mehr als 15 % und/oder eine Lichtdurchlässigkeit T_{L} von weniger als 50 % und/oder einen Opazitätsindikator von mehr als 85 aufweist.

2. Einrichtung (1) nach Anspruch 1, **dadurch gekennzeichnet, dass** die Oberfläche des Substrats (6) aus Glasmaterial größer als 0,9 m², besonders größer als 1 m², insbesondere mindestens 2 m² beträgt, wobei die Dicke des Substrats mindestens 2 mm, besonders mindestens 2,5 mm beträgt, insbesondere in der Größenordnung von 3 bis 30 mm liegt und vorteilhafterweise kleiner als 15 mm ist, insbesondere in der Größenordnung von 3 bis 15 mm liegt.

3. Einrichtung (1) nach einem der Ansprüche 1 oder 2,
**dadurch gekennzeichnet, dass** das Substrat (6) aus Glasmaterial mindestens 50 %, besonders mindestens 70 %, insbesondere mindestens 90 % der Oberfläche der Arbeitsplatte (1) einnimmt.

4. Einrichtung (1) nach einem der Ansprüche 1 bis 3,
**dadurch gekennzeichnet, dass** das Substrat (5) aus Sicherheitsglas oder aus Glaskeramik und vorzugsweise aus Glaskeramik besteht.

5. Einrichtung (1) nach einem der Ansprüche 1 bis 4,
**dadurch gekennzeichnet, dass** das Substrat (5) eine Ebenheit aufweist, die kleiner als 0,1 % der Diagonalen des Substrats und vorzugsweise kleiner als 3 mm, besonders kleiner als 2 mm, insbesondere kleiner als 1 mm ist, sogar in der Größenordnung von Null liegt.

6. Einrichtung (1) nach einem der Ansprüche 1 bis 5,
**dadurch gekennzeichnet, dass** das Glasmaterial eine Lichtdurchlässigkeit TL von mehr als 70 % aufweist.

7. Einrichtung (1) nach einem der Ansprüche 1 bis 6,
**dadurch gekennzeichnet, dass** das Glasmaterial Farbstoffe umfasst.

8. Einrichtung (1) nach einem der Ansprüche 1 bis 7,
**dadurch gekennzeichnet, dass** die Einrichtung als Heizelement(e) (7) ein oder mehrere Induktionsheizmittel umfasst, wobei das oder die Heizelemente in einer oder mehreren Zonen des Substrats angeordnet oder unter dem Substrat gleichmäßig verteilt sein können, wobei sie beispielsweise mindestens 25 % der Oberfläche des Substrats einnehmen oder mehr als 50 %, besonders mehr als 75 %, sogar mehr als 85 % der Oberfläche des Substrats einnehmen.

9. Einrichtung (1) nach einem der Ansprüche 1 bis 8,
**dadurch gekennzeichnet, dass** die Arbeitsplatte (5) Kochstellen, senkrecht zu den Heizmitteln (7), und/oder andere Zonen und/oder Elemente und/oder Funktionen und/oder Dekorationen umfasst, die nach Aktivierung und/oder permanent mittels einer oder mehrerer Lichtquellen (8) und/oder mittels einer festen Dekoration, zum Beispiel aus Emaille, kenntlich gemacht sind.

10. Einrichtung (1) nach Anspruch 9, **dadurch gekennzeichnet, dass** die Kochstellen und/oder andere Zonen und/oder Elemente und/oder Funktionen und/oder Dekorationen mittels oder durch mindestens eine Lichtquelle (8) nach Aktivierung der Quelle kenntlich und/oder deutlich gemacht sind, wobei die Quelle (8) über dem Substrat (5) oder auf der Seite der sichtbaren Fläche des Substrats (5) oder auf der Seite, wo die Anzeige betrachtet wird oder zu sehen ist, angeordnet ist und eine Lichtanzeige durch Projektion auf diese ein Anzeigefeld bildende Fläche ermöglicht.

11. Einrichtung (1) nach einem der Ansprüche 1 bis 11,
**dadurch gekennzeichnet, dass** die oder die mehreren Lichtquellen (8) oder (eine) andere Komponente(n) durch Kontakt auf die Oberfläche der Platte und/oder durch die Schnittstelle und/oder auf eine Außeneinheit oder durch Bewegung der Hand aktivierbar ist/sind.

12. Einrichtung (1) nach einem der Ansprüche 1 bis 12,
**dadurch gekennzeichnet, dass** die Einrichtung mehrere Lichtquellen (8) umfasst, die so angeordnet sind, dass der Winkel zwischen jeder Quelle oder zwischen jedem Element, welches das Licht in Richtung der Arbeitsplatte sendet, und der Normalen zur Arbeitsplatte zwischen 5 und 60°, vorzugsweise zwischen 30 und 45° beträgt, um die Schatteneffekte, die von einer Person projiziert werden, die auf der Arbeitsplatte (5) arbeitet, zu minimieren.

13. Einrichtung (1) nach einem der Ansprüche 1 bis 13,
**dadurch gekennzeichnet, dass** die Schnittstelle (12) die drahtlose Kommunikation ermöglicht, insbesondere mit einer Einheit außerhalb der Arbeitsplatte, welche zum Beispiel die Fernaktivierung von Heizzonen (7) und/oder Lichtquellen (8) und/oder den Befehl unterschiedlicher Funktionen ermöglicht, wobei die Außeneinheit zum Beispiel die Form einer Tastatur, eines Tablets oder eines Touchscreen oder eines Mobiltelefons aufweist, wobei diese Einheit stationär oder bewegbar sein kann, wobei die drahtlose Kommunikation mit begrenzter Reichweite sein kann, z. B. begrenzt auf das Volumen des Teils, in dem sich die Einrichtung befindet.

14. Einrichtung (1) nach einem der Ansprüche 1 bis 14,
**dadurch gekennzeichnet, dass** die Schnittstelle (12) die Übertragung unterschiedlicher durch Kontakt oder Bewegung initiierter Signale zur Aktivierung unterschiedlicher Komponenten ermöglicht und/oder das Herunterladen und/oder Senden von Daten wie Internetseiten, Bildschirmhintergründen oder Kochrezepten ermöglicht, wobei diese Daten beispielsweise an Lichtquellen (8) übertragen werden, die insbesondere ihre Anzeige auf der Oberfläche der Arbeitsplatte (5) ermöglichen.

15. Einrichtung (1) nach einem der Ansprüche 1 bis 15,
**dadurch gekennzeichnet, dass** die Einrichtung eine oder mehrere Schnittstellen derselben Art oder unterschiedlicher Art umfasst, welche das Steuern eines oder mehrerer Elemente ermöglichen oder zum Beispiel das Koordinieren der Aktivierung der Heizzonen mit der Aktivierung der Lichtquellen ermöglichen.

16. Einrichtung (1) nach einem der Ansprüche 1 bis 16,
**dadurch gekennzeichnet, dass** das gebundene Element in Form einer Platte aus Glimmer, Holz, Furnierholz, Laminat, Kunststoff, Glas oder Stein vorliegt.

17. Einrichtung (1) nach einem der Ansprüche 1 bis 17,
**dadurch gekennzeichnet, dass** die Arbeitsplatte (5) horizontal auf mindestens einem oder mehreren Trägerelementen, wie einem Korpus (4) eines Möbels (2) oder einem Stützfuß oder Stützfüßen, angebracht ist, wodurch sie mit den Trägerelementen einen Tisch, ein Möbel, massiv oder nicht, oder eine Theke bildet.

## Claims

1. Mobile and/or household interactive furniture equipment (1), comprising:
at least one work surface (5) formed by at least one substrate (6) made of transparent monolithic glass material with a surface area greater than 0.7 m2, said substrate having a light transmission T_{L} greater than 60% and an opacity indicator ranging from 5 to 90, said substrate (6) being mostly or entirely bare or coated with one or more coatings such that the coated substrate has a blur of less than 15% and/or a light transmission T_{L} greater than 60% and/or an opacity indicator lower than 85,
at least one heating element (7),
at least one light source (8), particularly intended to materialize one or more zones, elements, or displays on the substrate, said source (8) being positioned above the substrate (6) for projection display or below the substrate for transmission display through the substrate,
at least one communication interface (12) with at least one element of the surface (5) such as the light sources (8) and/or the heating element(s) (7), and/or with at least one external element for wireless communication,
and an element attached to the substrate (6) or work surface (5) in such a way that the combination of the substrate (6) or work surface (5) and the attached element has a blur of more than 15%, and/or a light transmission T_{L} lower than 50%, and/or an opacity indicator higher than 85.

2. Equipment (1) according to claim 1, **characterized in that** the surface of the glass material substrate (6) is greater than 0.9 m2, particularly greater than 1 m2, especially at least 2 m2, with the thickness of said substrate being at least 2 mm, notably at least 2.5 mm, particularly ranging from 3 to 30 mm, advantageously less than 15 mm, especially ranging from 3 to 15 mm.

3. Equipment (1) according to claim 1 or 2, **characterized in that** the glass material substrate (6) occupies at least 50%, particularly at least 70%, especially at least 90% of the surface of the work surface (1).

4. Equipment (1) according to one of claims 1 to 3, **characterized in that** the substrate (5) is made of tempered glass or vitroceramic, preferably vitroceramic.

5. Equipment (1) according to one of claims 1 to 4, **characterized in that** the substrate (5) has a flatness of less than 0.1% of the diagonal of the substrate, and preferably less than 3 mm, notably less than 2 mm, particularly less than 1 mm, or even close to zero.

6. Equipment (1) according to one of claims 1 to 5, **characterized in that** the glass material has a light transmission T_{L} greater than 70%.

7. Equipment (1) according to one of claims 1 to 6, **characterized in that** the glass material includes colorants.

8. Equipment (1) according to one of claims 1 to 7, **characterized in that** the heating element(s) (7) comprise one or more induction heating means, the heating element(s) being located in one or more zones of the substrate or uniformly distributed beneath the substrate, occupying, for example, at least 25% of the substrate surface or more than 50%, notably more than 75% or even more than 85% of the substrate surface.

9. Equipment (1) according to one of claims 1 to 8, **characterized in that** the work surface (5) comprises cooking areas, aligned with the heating means (7), and/or other zones and/or elements and/or functions and/or decorations, indicated by one or more light sources (8) upon activation or continuously, or by means of a fixed decoration, such as enamel.

10. Equipment (1) according to claim 9, **characterized in that** the cooking areas and/or other zones and/or elements and/or functions and/or decorations are indicated and/or highlighted using at least one light source (8) activated by said source, said source (8) being positioned above the substrate (5) or on the side of the visible face of the substrate (5) or on the side where the display is desired or should be seen, allowing a luminous display by projection onto the screen-like face.

11. Equipment (1) according to one of claims 1 to 11, **characterized in that** the light source(s) (8) or other component(s) can be activated by contact with the surface of the work surface and/or the interface and/or an external unit, or by hand movement.

12. Equipment (1) according to one of claims 1 to 12, **characterized in that** the equipment comprises multiple light sources (8), arranged such that the angle between each source or between each element emitting light towards the work surface and the normal to the work surface is between 5 and 60°, preferably between 30 and 45°, to minimize the effects of shadow cast by a person operating on the work surface (5).

13. Equipment (1) according to one of claims 1 to 13, **characterized in that** the interface (12) enables wireless communication, particularly with an external unit to the work surface, allowing, for example, remote activation of the heating zones (7) and/or light sources (8) and/or control of different functions, wherein the external unit may be in the form of a keyboard, tablet, touch screen, or mobile phone, and may be fixed or mobile, with the wireless communication being limited in range, for example, limited to the volume of the room in which the equipment is located.

14. Equipment (1) according to one of claims 1 to 14, **characterized in that** the interface (12) enables the transmission of various signals initiated by contact or movement to activate different components and/or allows downloading and/or transmission of data such as web pages, wallpapers, or recipes, said data being transmitted, for example, to light sources (8) enabling their display on the work surface (5).

15. Equipment (1) according to one of claims 1 to 15, **characterized in that** the equipment comprises one or more interfaces, of the same type or different, allowing the control of one or more elements or coordinating the activation of the heating zones with the activation of the light sources.

16. Equipment (1) according to one of claims 1 to 16, **characterized in that** the attached element is in the form of a mica plate, wood, plywood, laminate, plastic, glass, or stone.

17. Equipment (1) according to one of claims 1 to 17, **characterized in that** the work surface (5) is horizontally mounted on at least one supporting element, such as a cabinet (4) of a piece of furniture (2) or one or more supporting legs, thereby forming a table, a solid or hollow piece of furniture, or a countertop.
